# EUROPEAN PATENT APPLICATION

(11) **EP 0 657 267 A2**
(43) Date of publication of application: **14.06.1995**
(21) Application number: 94308789.0
(22) Date of filing: 29.11.1994
(51) Int. Cl.: B29C 44/58, B29C 33/56

(54) **Method for improving surface quality of foamed thermoplastic molded articles**

(30) Priority: 10.12.1993 US 166325
(71) Applicant: GENERAL ELECTRIC COMPANY, Schenectady, NY 12345 (US)
(72) Inventor: Foust, Donald Franklin, Scotia, New York 12302 (US); Kim, Bang Mo, Schenectady, New York 12309 (US); Niemeyer, Matthew Frank, North Chatham, New York 12132 (US); Baumgartner, Charles Edward, Niskayona, New York 12309 (US)
(74) Representative: Pratt, Richard Wilson

(57) **Abstract**

The invention is directed to molding foamable thermoplastic materials employing an insulated mold structure, in order to improve the surface quality of the foamed article. In an exemplary embodiment, a first insulation layer (26) is deposited on the core (12) and a second or primer layer (28) is deposited on the first layer which includes a suspension in metallic particles in a resin. A hard metal coating may be deposited over the second layer. Foamed thermoplastic articles formed using the molds have uniform surface quality, and high adhesion to metal coatings exhibiting good electrical properties.

## Description

### BACKGROUND OF THE INVENTION

This invention relates to molding of thermoplastic materials, and more particularly, to articles useful as molds for foamed thermoplastic materials and methods for molding employing such articles.

Various types of molds have long been in use for preparing shaped articles from thermoplastic resins, in such operations as blow molding, compression molding, injection molding and injection compression molding. Molds for these purposes are typically manufactured from metal or a similar material having high thermal conductivity.

Blow molding involves the extrusion of a molten tube of resin called a parison into a mold. The mold closes around the parison, pinching the bottom of the parison closed. A gas such as air is then introduced causing the tube to expand against the cool surfaces of the mold. When the parison comes into contact with the cool mold surface, the plastic at the surface quickly freezes. This results in surface imperfections such as die lines, fold lines, pores and voids.

In compression molding, composite blanks of glass reinforced thermoplastic sheets are heated. The material is heated above its melting point or if an amorphous material at least substantially above its glass transition temperature. When the composite blanks are heated, they expand (loft) due to the recoil forces within the fibers. The hot blanks are then pressed between cool mold surfaces which are below the melting point or glass transition temperature. Contact with the cool mold surfaces results in frozen resin on the surface of the blank. This creates unfilled areas in the form of exposed fibers and surface porosity. The resin at the cold surface is frozen and does not flow. Thus, rough boundaries between the charged and newly formed areas are produced.

Injection molding involves injecting molten thermoplastic resin into a mold apparatus. Molds for injection molding of thermoplastic resin are usually made from metal material such as iron, steel, stainless steel, aluminum alloy or brass. Such materials are advantageous in that they have high thermal conductivity and thus allow the melt of thermoplastic resin to cool rapidly and shorten the molding cycle time. Rapid cooling, the injected resin freezes instantaneously at the mold surface, resulting in a thin solid layer which restricts the flow of the molten material.

Rapid quenching and resulting reduced flow of the melt at the mold surface creates several problems, particularly when molding resins which contain large amounts of fillers in the form of fibers and powders. The freezing of these materials at the mold surfaces creates rough surfaces such as exposed fillers, voids and porosity. The quick solidification of the melt combined with limited flowability of the materials makes it difficult to achieve melt flow over a large area. This is especially troublesome when producing thin parts. The use of multiple gates for large and often complex mold cavities produces weld lines where flow fronts meet, which are unsightly and weak. Another important consideration in injection molding of high quality parts is the residual stresses in the molded parts. Residual stress inside a part can result in dimensional instability over the lifetime of the part. Non-uniform residual stresses are often characterized by non-uniform or severe birefringence. Dimensional stability and uniformity of refractive indices are required for high quality parts.

In injection compression molding which is a combined process, a hot thermoplastic melt is injected into a mold cavity. The parting line of the mold is positioned open or allowed to be forced open by the injected melt typically 0.05" to 0.3" inches. The clamping force is increased initiating the compression stroke of the mold forcing the melt to fill the cavity. In many instances the velocity of the melt front through the cavity changes as the injection stroke stops and the compression stroke begins. This distinct change in melt front velocity is often characterized by a stall followed by a surge in the melt front.

The melt begins to quench on the cavity walls as it is injected into the mold. As the melt front stalls, at the completion of injection, and then surges forward, upon the initiation of compression, a blemish, sometimes referred to as a halo, may be produced in the surface of the molded article. The blemish is the result of differential cooling and shear stress which occurs in the injection compression process as a result of the melt front velocity change.

Some thermoplastic materials incorporate foaming agents to cause the melt to expand due to formation of bubbles therein. These expanded materials have reduced density, yet remain strong. The materials are thus useful where reduced weight is desirable as in the manufacture of computer housings, for example. However, in a conventional mold the foaming agents can cause an irregular molded surface. The melt is under pressure as it is injected from the machine barrel into the mold. The melt front is at atmospheric pressure which is insufficient to keep the blowing agents in solution. The resin foams at the melt front, due to low pressure, and the exposed foam bubbles smear on the cavity surface and are quenched in place thus creating a highly blemished, splayed surface typical in structural foam molding. This type of surface may be acceptable for certain parts which are not visible. However, it is not acceptable for the parts which can be seen during normal use, for example, the exterior of a computer monitor housing.

There have recently been disclosed multilayer molds in which a metal core has an insulating layer bonded thereto, for the purpose of slowing the initial cooling of the resin during the molding operation. The insulating layer is fabricated of material having low thermal conductivity, thus slowing the cooling of the molten resin, and also having good resistance to high temperature degradation, permitting use in a mold maintained at high temperatures. Said layer may be made of a resin such as polyimide, polyamideimide, polyethersulfone or polyetherketone, typically applied in uncured form (e.g., as a polyamic acid in the case of a polyimide or polyamideimide) and subsequently cured. Cured resins in a solvent carrier may now be employed.

The strength and abrasion resistance of such insulated coatings is improved by application of one or more skin layers of hard material, typically metal, which is bonded to the insulating layer. Such deposition operations introduce their own problems into the mold fabricating process. It is well known, for example, that the adhesion of metal layers to resinous substrates is poor. Methods for improving adhesion of the metal layer to the coating are discussed in EP-A-0614413 (US patent applications serial nos. 936464 of 28 August 1992 and 117864 of 17 August 1993) Attorney Docket No. 8CT-5478, assigned to the assignee herrein, the teachings of which are incorporated herein by reference. In one embodiment, a metal filled primer layer is disposed intermediate the insulating layer and the hard metal coating.

As noted above, a smooth or regular molded surface is desirable because it improves appearance. However, it sometimes becomes necessary to metal plate the surface of molded parts for aesthetic, abrasion resistance or other technical reasons. It is known that adhesion of metal coatings to the thermoplastic materials is poor. Improvement in adhesion is often achieved by mechanically abrading or chemically treating the surface, or both. Indeed, an irregular porous surface may offer good adhesion of such metal coatings. However, it has been found that the irregularities do not provide for uniformly improved adhesion. In addition, the irregular surface is not aesthetically pleasing, either before or after metal plating.

Another difficulty with the irregular surface is that the time required to deposit a given plating thickness increased because the surface area of the porous surface is greater than a smooth surface. Also, more plating material is used. In electronic applications, the irregular plated surface has inferior electrical properties in terms of lower EMI/RFI shielding capability.

It is therefore desirable to produce a molded article having a smooth or regular surface characteristic formed of a thermoplastic material employing a foaming agent. It is also desirable to achieve good peel adhesion of plating materials of surfaces and improve the electrical properties thereof without abrading or otherwise treating finished surface of the article.

### SUMMARY OF THE INVENTION

The present invention is based on the discovery that a molded article having a smooth or regular surface characteristic may be formed of a thermoplastic material employing foaming agents to reduce density. The article is produced in a mold having a durable insulated layer or coating over all or part of mold surface. In one embodiment, the mold has a metal surface on a layer of low thermal conductivity, typically a resin layer. This surface may comprise one or two layers, depending on whether the surface desired is merely metal-rich or is a metal skin. Said metal surface has high adhesion to the underlying resin layer and is also relatively easy to repair.

Accordingly, one aspect of the invention is a mold for thermoplastic materials employing foaming agents to reduce density comprising:
a substrate having high thermal conductivity; and
a first layer of filled or unfilled temperature-resistant material having low thermal conductivity, deposited on said substrate.

In another form, a second layer is deposited on said first layer, the second layer may be in the form of a porous matrix comprising a suspension of metal particles in a temperature-resistant material having low thermal conductivity.

In another embodiment, which takes advantage of porous nature of the second layer, said second layer acts as a primer for a hard metal skin layer which is deposited thereon. The hard skin layer penetrates the pores and forms a good mechanical bond with the second layer.

Another aspect of the invention is a method for molding foamed thermoplastic articles having a smooth or regular surface characteristic by injecting a foamable plastic into such mold, allowing the mold to cool and ejecting the article from the mold.

The invention is also directed to a molded article having a smooth or regular surface characteristic of reduced surface area capable of receiving a metal plating, having improved peel adhesion over conventionally molded articles. The plated article also exhibits an improved electromagnetic interference (EMI) shielding over conventional articles.

The process for plating such articles also consumes less plating material and produces a uniform coating more quickly than conventional processes.

### BRIEF DESCRIPTION OF THE DRAWINGS

The subject matter which is regarded as the invention is particularly pointed out and distinctly claimed in the concluding portion of the specification. The invention, however, both as to organization and method of practice, together with further objects and advantages thereof may best be understood by reference to the following description taken in conjunction with the accompanying drawing figures in which:
Fig. 1 is a fragmentary schematic side sectional view of an injection compression molding apparatus with one or more gates employing an insulated mold according to the invention;
Fig. 2 is an enlarged fragmentary cross section of the mold illustrating the insulating layer in detail.
Figs. 3A-3H are photomicrographs comparing the molded surfaces of foamed thermoplastic materials prepared in molds with and without the mold surface of the present invention.
Fig. 4 is a comparative plot schematically showing the time temperature relationship of a thermoplastic material relative to the glass transition temperature T_{g} in a conventional mold and in a mold according to the present invention; and
Fig. 5 is a fragmentary cross section of a foamed thermoplastic material molded in accordance with the invention having a metal coating.

### DESCRIPTION OF THE INVENTION

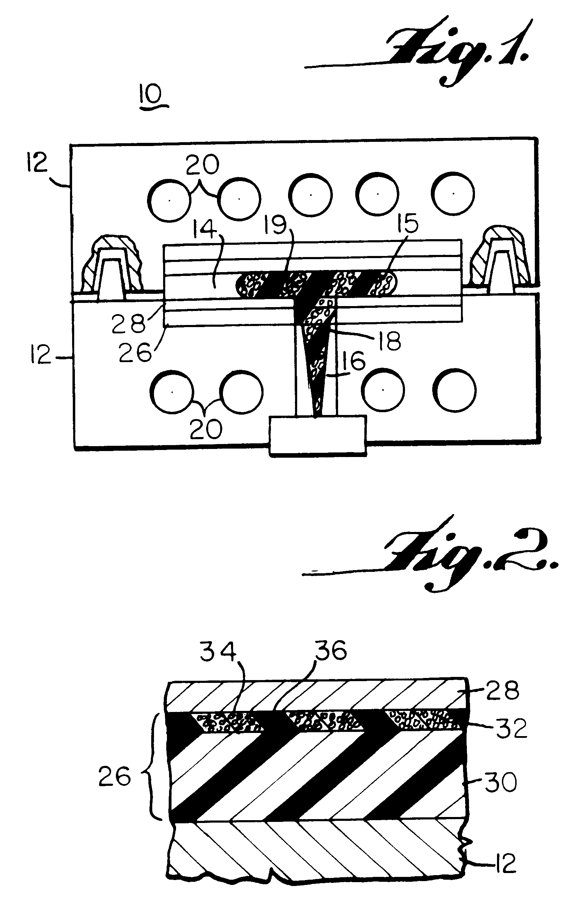

Referring now to the drawings where like numerals indicate like elements throughout. Fig. 1 shows a multilayered mold 10 of the present invention. While the attributes of the present invention are applicable to many types of molding, an injection compression molding apparatus is illustrated in the drawings. The mold 10 comprises two core halves 12 relatively moveable with respect to each other and situated in opposing or confronting relationship so as to form a mold cavity 14 therebetween. Hot foamable thermoplastic resin 15 is injected from a source (not shown) into the mold cavity 14 via a sprue 16 and a gate 18. After the injection step, the mold halves 12 may be moved relative to each other to further compress and spread the thermoplastic material 15 in the cavity 14. In addition, due to the presence of foaming agents, gas bubbles 19 are formed in the thermoplastic material 15. The gas bubbles 19 cause expansion of the thermoplastic material 15 within the mold cavity 14 whereby the cavity is filled with a relatively high strength, low density, melt. The mold halves 12 are made of a material with a relatively high thermal conductivity such as iron, steel, stainless steel, aluminum alloy or brass. Cooling lines 20 for receiving a cooling fluid are provided in the core halves 12 to reduce cycle time. A thermal insulating layer 26 is disposed on each of the core halves 12. The thermal insulating layer 26 is ideally made from a low thermally conductive material such as high temperature thermoplastics, thermosets, plastic composites, porous metals, ceramics and low-conductivity metal alloys. Other low thermally conductive materials used for insulation could also be used.

The insulating layer 26 is preferably made of a resin such as polyimide, polyamideimide, polyamide, polysulfone, polyethersulfone, polytetrafluoroethylene, polyetherketone, with or without fillers, typically applied in uncured form (e.g., as a polyamic acid in the case of a polyimide or polyamideimide) and subsequently heat cured.

Depending on the type of insulating material selected, the insulating layer is often not sufficiently strong enough to withstand the molding process and cannot produce the desired surface quality. Therefore, a hard skin layer 28 is optionally applied over the insulating layer 26 to protect the insulating layer and to provide the desired surface finish. The skin layer 28 must be made from a material which exhibits mechanical strength and abrasion resistance. The skin layer should also have a reasonably high thermal conductivity. The skin layer 28 is preferably fabricated from nickel but may also be fabricated from iron or iron alloys, cobalt or cobalt alloys, titanium, aluminum, brass, copper, ceramics, glass, quartz, or metal containing composites, such as set forth in EP-A-0614413 (docket no. 8CT-5478) referred to above. The skin layer 28 may be electro-deposited, vapor-deposited, or otherwise coated, or preferably electroless deposited on the insulating layer 26 as hereafter described.

In operation, as the hot thermoplastic resin 15 is injected into (and if desired, compressed in) the mold cavity 14. During injection, the thermoplastic material 15 may begin to foam thereby partially filling the cavity 14. Heat from the molten, foaming resin is absorbed by the skin layer 28. The insulating layer 26 prevents quick cooling of the resin and causes the skin layer 28 to reheat. This results in a hot plastic surface for a short time period while the resin fills the mold. The bubbles 19 thus do not freeze at the interface between the skin layer 28 and the resin 15. The heated skin layer thereby provides the desired surface quality to the finished part. The part is held in the mold for a time sufficient for the article to cool below the glass transition temperature of the resin, and it is then ejected from the mold.

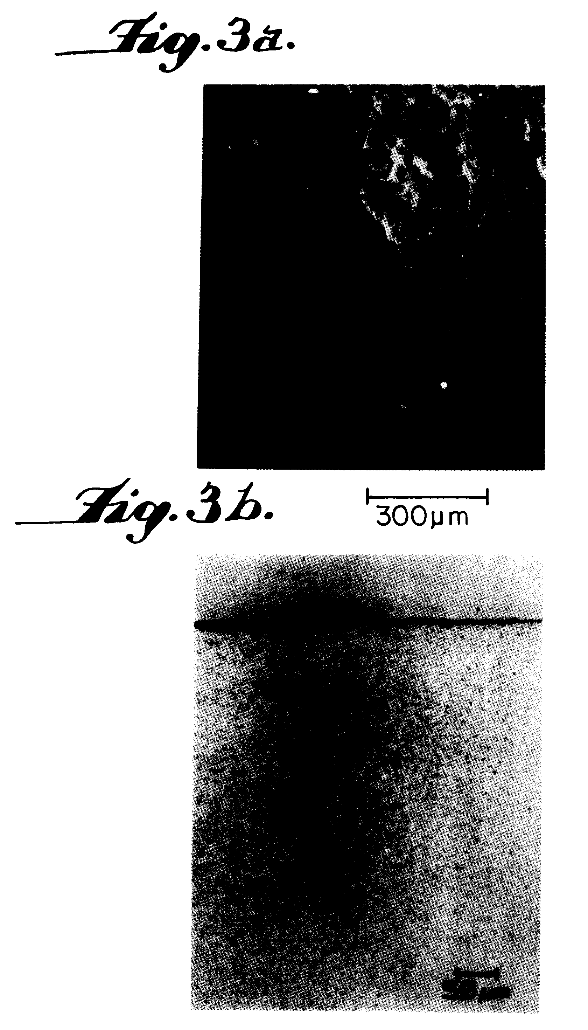

In accordance with a feature of the invention shown in Fig. 2, the insulating layer 26 comprises an inner layer 30 in contact with the core 12 and a composite outer or primer layer 32 atop the inner layer 30. The composite layer 32 comprises a porous matrix of particles 34 embedded in a continuous phase material 36. The particles 34 when used alone protect the continuous phase material 36. In addition, when used with the hard outer skin layer 28, the particles 34 are preferably of the same or a similar material. The hard skin layer 28 enters the porous matrix and bonds to the metal particles 34 forming anchoring points for enhancing adhesion of the outer skin layer 28 to the insulating layer 26.

The first or inner layer 30 in the insulating layer 26 is typically a resin, *i.e.*, a polymer of the type described herein, having low thermal conductivity and being resistant to high temperatures. Polyimides, polyamidimides, polyethersulfones and polyetherketones are illustrative. Polyimides and polyamidimides are often preferred. The layer 30 may be lightly filled with an inorganic filler (e.g., BₐSO₄ or quartz powder) having a particle size of about 10-20 µ. The polyimide may optionally be a fluorinated polyimide to further enhance adhesion of deposited metal.

The inner layer 30 may be deposited by any of numerous art-recognized methods such as roller coating or spraying. In the case of a mold, spraying is usually preferred because of its effectiveness to coat an irregular surface uniformly. Many of the exemplary resins contemplated herein, including polyimides and polyamideimides, are cured after deposition. The thickness of the first layer is not critical but is typically in the range of about 10-500 microns.

A feature of the invention is the primer layer 32, which is the porous metal-containing composite layer deposited on said first layer 30. The continuous phase 36 of the metal-containing layer is a temperature-resistant polymer having low thermal conductivity. Said polymer is most often identical to the one employed as the first insulating layer 30. The identity of the metal particles 34 suspended in the polymer 36 is not critical so long as it is substantially resistant to oxidation under the conditions of use of the mold. Nickel is often preferred.

The shape of the metal particles 36 is also not critical. However, non-spherical particles are preferred because they promote better adhesion to the hard skin layer 28. They may be, for example, in the form of platelets, fibers or whiskers. Typical metal particle sizes are in the range of about 1-20 microns. It is preferred that the bulk density of the metal particles be below about 2 g./cc. The thickness of the second layer 32 is typically in the range of about 10-100 microns, with about 25-50 microns usually being preferred.

In one embodiment of the invention, the particle containing primer layer 32 contacts the resin 15 being molded. This embodiment is particularly useful when said resin 15 is charged to the mold at relatively low pressure, as in blow molding and low pressure injection molding, whereby the mold surface encounters relatively low friction, and when the degree of smoothness of the surface of the molded part is not critical.

The metal constituent of the primer layer 32 is most often in platelet form in this embodiment, so as to produce a relatively dense, metal-rich surface wherein the particles 34 are substantially parallel to the surface of the mold. Nickel particles in platelet form are commercially available as, for example, "Novamet HCA-1" nickel filler, a product of Novamet Products Corp.

The bulk density of the metal in platelet form is preferably in the range of about 1.1-1.5 g./cc., and the particles thereof generally have an average width on the order of 10 microns and an average thickness in the range of about 0.1-0.5 micron. Said metal is typically suspended in the resin at weight ratios of metal to resin (excluding solvent) in the range of about 0.5-5.0:1.

Conventional application methods such as those described above with reference to the first layer 30 may also be employed for the primer layer 32, with spraying generally being preferred. When necessary, said primer layer 32 is cured after application.

This primer layer 32 having nickel particles 34, preferably connected in strand form, adheres well to the inner layer 30 because both layers are coated from nearly identical solvent systems allowing good interpenetration of the resins. The Ni particles or strands 36 in the primer 32, which may comprise the majority of the layer by weight, are coated and encapsulated with the resin forming the continuous phase 36 having pores.

The metal surfaces provided by the invention are particularly advantageous because of the ease of repairing scratches and other minor damage therein. All that is necessary is to apply further metal-resin suspension, typically by the same application method previously employed, and to burnish or polish the resulting surface after curing of the resin if curing is necessary. The repaired surface is then suitable for continued use.

The metal coating 28 may be deposited, for example, by electroless deposition, on to the primer layer 32. During deposition of a Ni deposit over the primer, the electroless layer 28 penetrates the pores and becomes mechanically tied to the primer 32, as well as potentially developing metallic bonding to the exposed Ni particles 34. It can be appreciated that adhesion of the final electroless coating 28 should be influenced by conditions such as: the morphology or porosity of the primer layer (Ni type, Ni/resin ratio, resin type, and application temperature); how well the electroless Ni deposit penetrates into the porous structure (surface preparation and preplating conditions); and the primer layer integrity as well as its bonding to the insulator surface (resin section, application temperature, Ni/resin ratio). Various factors are discussed with respect to the examples hereinafter set forth.

One particular advantage of using irregular-shaped or fibrous metal particles 34 is that the resulting primer layer 32 is porous which allow for the penetration of the metal layer 28 deeply into the matrix forming the prime layer 32. This promotes good adhesion of the metal layer 28 to the insulating layer 26. Another advantage of the fibrous metal particles 34 is that exposed surface particles in the prime layer 32 are catalytic toward electroless deposition of metals such as nickel. It may nevertheless be advantageous under some conditions to treat the surface of the second layer to further activate it catalytically. Typical treatments of this type may include abrasion to expose a maximum of metal particles and/or surfactant treatment to increase their hydrophilicity.

The particles 34 may have a whisker shape and a somewhat lower bulk density than the platelet-form, typical bulk densities being in the range of about 0.4-1.0 g./cc. Filament lengths in the range of about 10-50 microns are typical. Products of this type are illustrated by "Novamet 255", "Novamet 255AC" and "Novamet 287" nickel powders. The metal in the second layer itself is porous as contrasted with the dense metal surface provided in the first embodiment. Metal to resin ratios of about 1-4:1 are preferred, since optimum adhesion of said further coating 18 is observed in this range.

The deposition of the primer layer 32 in this embodiment may be effected by the methods described hereinabove with respect to the first embodiment. Similar ratios of metal to resin may be employed. The metal coating 28 may be applied by such known methods as electroless or electrolytic deposition; electroless deposition is usually preferred for large mold surfaces, and electroplating for small surfaces.

Improved adhesion of the metal coating 28 is believed to be provided according to this embodiment by a combined mechanical and metallurgical interaction between said coating and the metal in the second layer. The second layer 32 is also electrically conductive by reason of the metal therein, facilitating, if desired, the electro deposition of further metal thereon.

The article molded by contact with the mold described herein has a resulting surface which may be characterized as finished, that is, having a Gardner gloss at 60° greater than about 80, determined in accordance with ASTM Standard Test Method for Specular Gloss Designation D523-89, and a mean average roughness Rₐ of less than about .1-.2 micrometers (i.e., the arithmetic average height of roughness irregularities measured from a mean line which is within an evaluation length L). Other measurements which are used to characterize surface quality are: maximum roughness depth (per DIN) Rₘₐₓ, which is the largest of the five (5) maximum peak-to-valley roughness depths in five (5) successive sampling lengths; and mean roughness depth R₂ (per DIN)--also known as R_{TM}--which is the mean of five (5) maximum peak-to-valley roughness depths in five (5) successive sampling lengths. The measurement accuracy may be characterized by ANSI-B46.1; ISO; DIN or MIL specifications. Such a surface needs no further finishing and may conveniently referred to as a class "A" finish. Such a finish is aesthetic. Thus, while the measured gloss and roughness are desirable characteristics to be achieved, human evaluation may prevail as to the acceptability of such a surface.

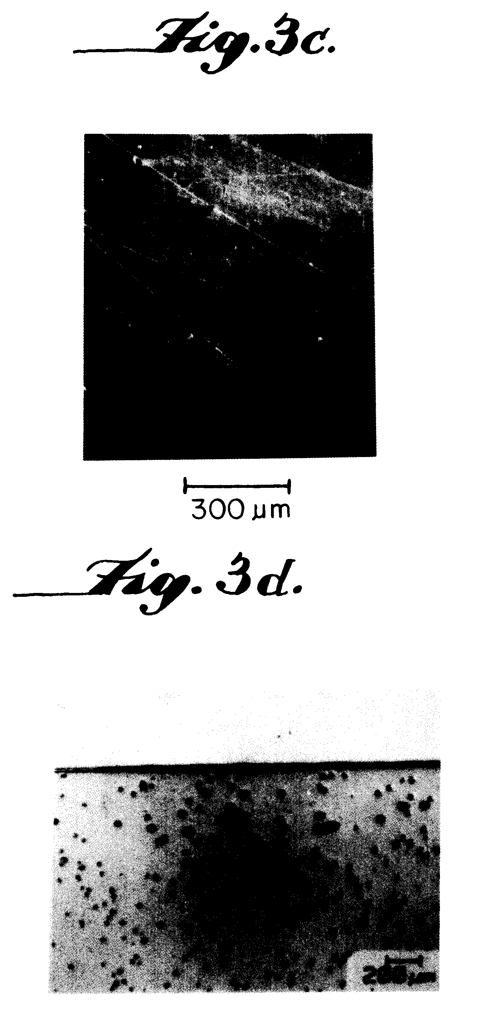

Figs. 3A - 3D are photomicrographs showing the surface quality of an injection molded foamed article manufactured using the molding surface in accordance with the invention. Figs. 3A and 3C are respective top views of a polycarbonate material and a high impact styrene, polypheneylene oxide polymer blend and Figs. 3B and 3D are respective side sectional views of the materials. Figs. 3E-3G are similar views showing the surface quality of articles manufactured in accordance with conventional injection molding techniques. The surfaces shown in Figs. 3A-3D are clearly superior in the smoothness and surface texture in comparison to the surfaces shown in Figs. 3E-3G.

According to the invention, various thermoplastic materials may be employed with the mold to produce finished products. Such plastics include polyamide materials sold under the trade designation "Nylon 6" or "Nylon 12" or "Nylon 6,6"; and other polymers such as polyesters, such as poly (butylene terephthalate) (PBT), poly (ethylene terephthalate) (PET), and PBT with soft ether linkages formed of polycarbonate and methylene, polyether ketones, polyetherimides, polylactams, polypropylenes, polyethylenes, polystyrene (PS), styrene acrylonitrile, acrylonitrile butadiene terpolymers, polyphenylene oxide (PPO)/polystyrene and PPO/nylon and high impact styrenes filled or unfilled and blends thereof. Materials particularly suited for use in the invention, because of their versatility, strength and appearance include filled or unfilled polycarbonates, polyesters, polyphenylene oxide, acrylonitrile butidiene styrene (ABS), polyetherimide and polymeric combinations of such materials.

According to the invention, the thermoplastic materials may contain a variety of known physical blowing or foaming or chemical blowing agents in order to cause the thermoplastic material to expand in the mold.

Examples of blowing agents include hydrazene, P,P'-oxybis (benzene sulfonyl hydrazene), modified or unmodified azodicarbon amide, P-Toluene sulfonyl semicarbazine, 5-phenyl tetrazole, trihydrazide triazine, hydrazine derivitive, N₂, and fluorocarbons. Materials operate in various temperature ranges are set forth in Plastics Technology Blowing Agents: A Foam Molder's Guide, March 1976. Also available are blowing agents concentrates sold by General Electric Co. under the trade designations FLC-95 (polycarbonate with N₂ and CO₂ evolved in equal proportions), FNC-20 (high impact styrene, polyphenelyene oxide with about 58% N₂, 40% CO₂, 2% NH₃ and others evolved), FVC-60/63 (poly butylene terepthalate 100% N₂ evolved) and FULC-20 (polyetherimide N₂ 50% and CO₂ evolved).

In addition to the foregoing, the following patents, the teachings of which are incorporated herein by reference disclose materials particularly useful for molding optical media such as optical discs and compact discs, and business machine parts which require optimum surface properties: Mille, U.S. Patent Nos. 4,774,315 and 4,788,275; Okamuto, U.S. Patent Nos. 4,997,903, Okamuto et al., U.S. Patent Nos. 4,977,233 and 4,902,735; Hasuo et al., 4,734,488; Myiauchi, U.S. Patent No. 4,670,479 and Japanese Patent J62207-358-A. These references disclose various materials having an average molecular weight within the range from about 10,000 and about 18,000 suitable for the molding applications herein discussed as well as other applications of interest to those skilled in the art.

The process according to the present invention is directed to the use of a mold as described herein for molding foamed articles. In particular, the mold may be employed in an injection molding or injection compression molding process where foamable molten thermoplastic material is injected into a mold cavity. The molten material expands due to the foaming reaction and spreads throughout the cavity due to such foaming action as well as injection and compression pressures, the material is held therein for a time sufficient to cool below the glass transition temperature after which the molded article is ejected. In compression/ injection molding, the molten thermoplastic material is compressed after the injection step. The invention results in molded foamed articles having less severe and more uniform birefringence, less stress, a smoother surface finish and better optical properties.

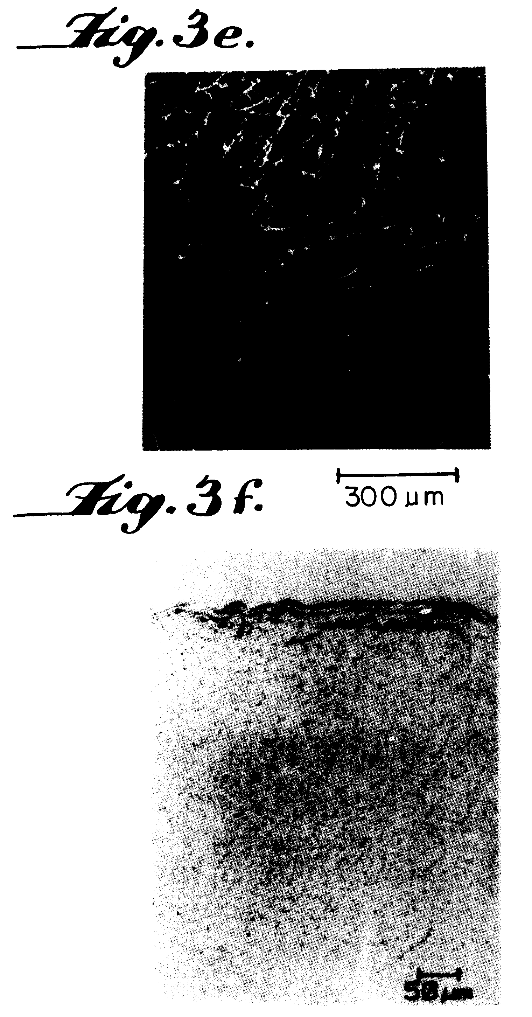

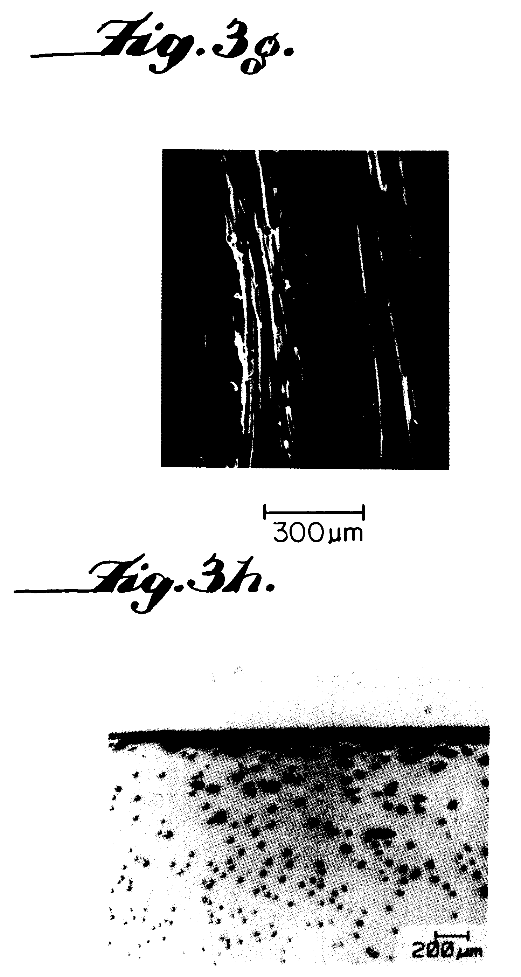

Fig. 4 schematically shows the transient temperature response of the surface temperature of an article molded in accordance with the teachings of the present invention, in comparison to the temperature profile of an article manufactured by conventional processes. In conventional molding represented by the dotted line the thermoplastic material at time t=0 initially comes in contact with the mold surface. As can be seen, the thermoplastic material in conventional apparatus, without insulation, is immediately cooled below the glass transition temperature T_{g}. Such rapid cooling can cause rough surfaces in the finished article. On the other hand, with the insulated mold structure of the present invention, the foamed thermoplastic material can be initially quenched by contact with the relatively cool skin of the mold and may temporally fall below the glass temperature T_{g}. However, the surface becomes reheated by the internal temperature of the hot molten thermoplastic material. Thus, the surface temperature increases to above the glass transition temperature, and the resin fills the mold thereby avoiding rough surfaces.

In conventional molding techniques as the melt front moves between the mold surfaces, the molten thermoplastic material solidifies thereby constricting the flow path of the material within the mold. This limits the flow length to some nominal distance. On the other hand, the insulated mold structure of the present invention reduces or eliminates the solidification of the molten thermoplastic material against the mold surfaces whereby the flow path is relatively unrestricted and the flow length is substantially increased. Also, the bubbles do not freeze and become stretched or distorted causing surface imperfections, as illustrated herein. In an injection molding apparatus the increase in flow length has been found to be about 5 to about 17 percent depending on the wall thickness. Using the teachings of the invention, for example, a 0.1 inch article manufactured from a polycarbonate filled with 10 percent glass had a 6 percent increase in flow length. A same material formed to a wall thickness of 0.08 inches had a 10 percent flow increase over conventional methods. An article molded to a thickness of 0.06 inches had about 17 percent increase in flow length over conventional molding techniques. Thus, it can be seen that the present invention is especially suited for injection molding and injection compression molding where strong, lightweight thin wall structures are desired.

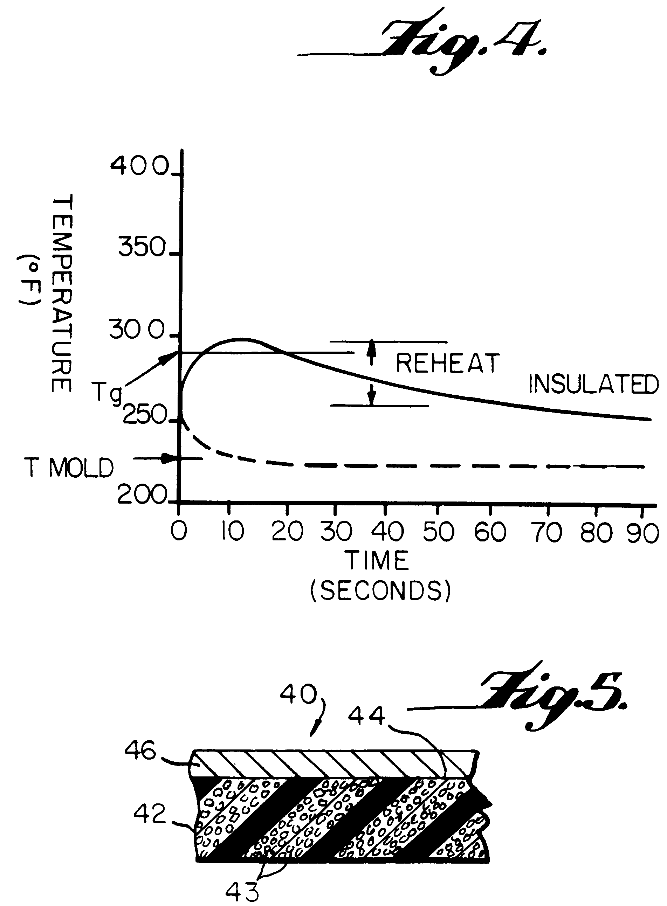

A fragmentary side sectional view of an exemplary article 40 manufactured using the mold of the present invention is shown in Fig. 5. The article 40 comprises a layer of foamed thermoplastic material 42 formed with bubbles 43 therein and having a smooth surface 44 formed by contact with the mold described herein. The surface 44 may have a metallization layer 46 deposited thereon. Such a layer has good adhesion to the article. Also, because the surface 44 is smooth and uniform, it has good uniform adhesion to the metal layer 46. Data on molded polyetherimide resin shows that the metallization layer has a peel adhesion of 9.6 lb/in peel when applied to a surface having a Gardner gloss of 82%. A convention article has a peel adhesion of 3.7 lb/in peel. The metal layer 46 is more uniform than such a layer formed on a conventional surface. It has been found that the deposition rate of the metal layer 46 is significantly proved the surfaces formed by conventional methods. Also, the electromagnetic interference (EMI) shielding of the metal layer 46 is improved over conventional metallized layers which are irregular.

It should be understood that the surface of the article 42 may be uniformly textured in accordance with the teachings of EP-A-94305440.3 (US Patent Application Serial No. 108025, filed 17 August 1993), Attorney Docket No. 8CT-5453, entitled "Method for Producing Textured Articles and Apparatus" and assigned to General Electric Company the assignee herein, the teachings of which are incorporated herein by reference.

The invention also comprises a method for manufacturing molded articles or parts having one or more finished surfaces. According to the invention, the method comprises charging, injecting or placing a plastic into a mold having a structure described hereinabove. The mold may be a compression or transfer mold apparatus or may be a high or low pressure injection molding apparatus. Such molding apparatus may employ a so-called cold runner or a hot runner in the feed. The apparatus may also employ a gas assist to implement the process. Gas assist known to those skilled in the art is especially useful in molding strengthened articles. Having a hollow strengthening rib to impart strength yet reduce large concentrations of thermoplastic material, such that, surface irregularities due to differential shrinkage are not manifested in the finished surface of the article. Such an arrangement is particularly useful for computer applications where a lightweight housing is desirable. Such a housing may be selectively metallized to provide EMI shielding. In addition, portions of the housing which are not visible may be made conventionally. That is, the mold may be selectively coated only in those areas where the housing is visible in normal use.

While there have been described what are at present considered to be the preferred embodiments of the present invention, it will be apparent to those skilled in the art that various changes and modifications may be made therein without departing from the invention, and it is intended in the appended claims to cover such changes and modifications as fall within the spirit and scope of the invention.

## Claims

1. A method for molding a thermoplastic material comprising the steps of:
charging a foamable plastic into a mold having a structure including a substrate having high thermal conductivity, and at least one layer of temperature-resistant material having low thermal conductivity disposed on the substrate;
retaining the foamable thermoplastic material within the mold for a time sufficient for the thermoplastic material to foam and to thereafter cool below its glass transition temperature; and
ejecting the cooled foamed article from the mold.

2. The method according to claim 1, wherein the mold further comprises an outer metallic skin formed on the layer of temperature resistant material.

3. The method according to claim wherein the layer of temperature resistant material further includes a suspension of metallic particles in a temperature-resistant material having low thermal conductivity depositing on said at least one layer.

4. The method according to claim 1, wherein the charging step comprises injecting molten thermoplastic material containing a physical blowing agent, foaming agent or chemical blowing agent selected from the group consisting of hydrazene, P,P'-oxybis (benzene sulfonyl hydrazene), modified or unmodified azodicarbon amide, P-Toluene sulfonyl semicarbazine, 5-phenyl tetrazole, trihydrazide triazine, hydrazine derivitive, N₂, and fluorocarbons into the mold.

5. The method according to claim 3, wherein the injection step includes at least one of using a cold runner, using a hot runner, and using a gas assist.

6. The method according to claim 3 wherein the charging step further includes compressing the injected thermoplastic material.

7. The method according to claim 1, wherein the thermoplastic material is a material selected from the group consisting of polyamides, polyester, polyethylene terepthalate (PET), polybutadiene terepthalate (PBT), PBT with soft linkages formed of polycarbonate and methylene, polyether ketones, polyetherimides, polylactams, polypropylenes, polyethylenes, polystyrene, styrene acrylonitride, acrylonitrile butadiene terpolymers, polypropylene oxide (PPO)/polystyrenes, PPO/nylons and high impact polystyrene filled or unfilled and blends thereof.

8. The method of claim 1, wherein the thermoplastic material contains a foaming agent, a physical blowing agent or chemical blowing agent.

9. The method according to claim 8, wherein the thermoplastic material is a material selected from the group consisting of filled or unfilled polycarbonates, polyesters, polyphenylene oxide, acrylonitrile butadiene styrene (ABS), styrene acrylonitrile, polyimide, blends and polymeric combinations thereof.

10. The method of claim 9, wherein the thermoplastic materials contain a foaming agent, a physical blowing agent or chemical blowing agent selected from the group consisting of hydrazene, P,P'-oxybis (benzene sulfonyl hydrazene), modified or unmodified azodicarbon amide, P-Toluene sulfonyl semicarbazine, 5-phenyl tetrazole, trihydrazide triazine, hydrazine derivitive, N₂, and fluorocarbons.

11. An article made in accordance with the method of claim 1.

12. The article according to claim 11, wherein a portion thereof molded by contact with the layer of temperature resistant material has a class A finish.

13. The method of claim 1 further comprising, depositing a metal film on the surface of the article.

14. The method of claim 1 wherein the metal surface has a peel adhesion of at least 5 lb/in peel.

15. A multilayer mold for molding foamable thermoplastic into finished parts, comprising:
a metal core;
an insulating layer of temperature-resistant polymer having low thermal conductivity, deposited on said core; and
a metal-containing primer layer comprising a suspension of metal particles in a temperature-resistant polymer having low thermal conductivity, deposited on said insulating layer.

16. A mold according to claim 15 wherein the polymer is a polyimide or polyamideimide.

17. A mold according to claim 15 wherein the metal particles are nickel.

18. A mold according to claim 15 wherein the metal is in platelet form and has a bulk density in the range of about 1.1-1.5 g./cc.

19. A mold according to claim 18 wherein the weight ratio of metal to polymer in the metal-containing layer is in the range of about 0.5-5.0:1.

20. A mold according to claim 15 which has a further metal coating deposited on said metal-containing layer.

21. A mold according to claim 20 wherein the metal in the metal-containing layer is in fiber, whisker or irregular form and has a bulk density in the range of about 0.4-1.0 g./cc.

22. A mold according to claim 21 wherein the weight ratio of metal to polymer in the metal-containing layer is in the range of about 1-4:1.

23. A mold according to claim 15 wherein the polymer is a resin.

24. A molded article comprising a body formed of a foamed thermoplastic material having at least one surface finished to a smooth or regular surface characteristic of reduced surface area and a Gardner gloss at 60° greater than about 80.
